# EUROPÄISCHE PATENTSCHRIFT

(11) **EP 0 754 595 B1**
(45) Veröffentlichungstag und Bekanntmachung des Hinweises auf die Patenterteilung: **09.05.2001**
(21) Anmeldenummer: 96109906.6
(22) Anmeldetag: 20.06.1996
(51) Int. Cl.: B60R 9/055, B60R 9/058, B60R 9/045

(54) **Variable Schnellbefestigung für Dachkoffer auf Autodach-Querträgern**
Variable quick fastening device for a roof luggage-case mounted on roof-rack transvers bars
Système variable de fixation rapide d?un coffre de toit sur les transverses d'une galerie de toit

(30) Priorität: 20.07.1995 DE 19526477
(43) Veröffentlichungstag der Anmeldung: 22.01.1997
(73) Patentinhaber: Thule GmbH, 92318 Neumarkt (DE)
(72) Erfinder: Behringer, Peter, 92339 Beilngries (DE)
(74) Vertreter: Matschkur, Lindner Blaumeier Patent- und Rechtsanwälte

(56) Entgegenhaltungen:
- WO-A-90/11206
- DE-A- 3 817 470
- DE-A- 3 910 952

## Beschreibung

Die Erfindung bezieht sich auf eine Halterungsvorrichtung zur leicht lösbaren verstellbaren Schnellhalterung eines Dachkoffers an auf einem Fahrzeugdach befestigten Querträgern, mit den Boden des Dachkoffers durchsetzenden und nach oben verspannbaren U-förmigen Zugbügeln.

Bei einer aus der DE 38 17 470 C2 bekanntgewordenen Halterungsvorrichtung der vorstehend beschriebenen Art dient zur Halterung ein U-förmiger Zugbügel, dessen einer Schenkel aushakbar mit dem den Dach-Querträger als Klemmschenkel untergreifenden Basisschenkel des Zugbügels verbunden ist. Die Zugbügel werden durch Schrauben im Innern des Dachkoffers angezogen und ermöglichen so eine lösbare Halterung, die nur vom Dachkofferinneren aus betätigbar ist und demzufolge auch diebstahlsicher ausgebildet ist.

Diese bekannte Anordnung ist jedoch nur für fest vorgegebene Abstände der Dach-Querträger geeignet und erfordert zum Betätigen das Auf- und Abschrauben zweier Schrauben je Zugbügel, was zum einen ein entsprechendes Werkzeug erfordert und zum anderen relativ aufwendig ist.

Der Erfindung liegt daher die Aufgabe zugrunde, eine Halterungsvorrichtung der eingangs genannten Art so auszugestalten, daß sie bei einfachem Aufbau eine sehr schnelle und einfache Montage und Demontage des Dachkoffers ohne irgendwelche Werkzeuge zuläßt und dabei auch wechselnde Abstände der Dach-Querträger problemlos auffangen kann. Desweiteren können mit diesem System die gebräuchlichsten Trägerquerschnitte abgedeckt werden.

Zur Lösung dieser Aufgabe ist erfindungsgemäß vorgesehen, daß die Schenkel des Zugbügels mit Außenverzahnung versehen sind, in die die mit Gegenverzahnung versehenen Enden von durch ein Gelenk miteinander verbundenen Spannbacken eingreifen, die durch einen im Gelenk angreifenden Spannhebel aus einer Einschubstellung für den Zugbügel, in der die ineinanderhängenden Verzahnungen durch federndes Ausweichen der Spannbacken nach außen eine verrastende Verschiebung des Zugbügels nach oben ermöglichen, durch Anheben des Gelenks in eine feste Eingriffsstellung der Spannbacken an die Schenkel des Zugbügels schwenkbar und anhebbar sind.

Durch die erfindungsgemäße Ausgestaltung muß man zum Befestigen den Dachkoffer lediglich auf die Querträger aufsetzen und die die Querträger umfassenden U-förmigen Zugbügel bis zur Anlage des Basisschenkels an der Unterseite des Querträgers einschieben. Anschließend wird der Spannhebel betätigt, der die Gelenkachse der Spannbacken nach oben anhebt, wodurch diese mit ihren freien Enden mit den Gegenverzahnungen in die Außenverzahnung der Schenkel des Zugbolzens eingedrückt werden und infolge des ja gleichzeitig stattfindenden weiteren Anhebens der Achse diesen auch fest gegen die Unterseite der Querträger auf dem Fahrzeugdach verspannen. Sowohl die Befestigung als auch das Lösen durch Zurückschwenken des Spannhebels erfolgt in extrem einfacher Weise und ohne daß irgendwelche Werkzeuge benötigt werden.

In Weiterbildung der Erfindung ist dabei die Ausbildung so getroffen, daß die Schenkel der Zugbügel die Spannbacken und den Spannhebel in Ausnehmungen durchsetzen, wobei die Spannbackenausnehmungen auch zur Aufnahme des Spannhebels dienen. Der Spannhebel ist also in den genannten Ausnehmungen der Spannbacken auf der gemeinsamen Gelenkachse gelagert.

Mit besonderem Vorteil kann weiter vorgesehen sein, daß die Zugbügel mit ihren Spannbacken und Spannhebeln jeweils in einem über einen abdichtbaren Längsschlitz des Kofferbodens verschiebbaren Tragkörper gelagert sind, auf dessen Oberseite sich der Exzenterhebel abstützt. Um dabei eine besondere Arretierung in der Spannstellung zu vermeiden, kann gemäß einem weiteren Merkmal der Erfindung vorgesehen sein, daß der Exzenterhebel bei der Verschwenkung aus der Einschubstellung in die Spannstellung in eine Übertotpunktlage gelangt, so daß er nicht versehentlich sondern nur durch einen entsprechenden Kraftaufwand wieder in die Einschubstellung zurückverschwenkt werden kann.

Um zur Abnahme des Dachkoffers von den Querträgern die U-förmigen Zugbügel möglichst einfach nach unten abziehen zu können, ist in weiterer Ausgestaltung der Erfindung vorgesehen, daß der Exzenterhebel, vorzugsweise gegen eine Federkraft, aus der Einschubstellung in eine die Verzahnungen völlig ausrastende Zugbügelfreigabestellung verschwenkbar ist. Diese Verschwenkung erfolgt entgegen der Schwenkrichtung in die Spannstellung, wobei in dieser Zugbügelfreigabestellung die Zugbügel mangels Ineinandergreifen der Zahnung allein durch das Eigengewicht nach unten herausfallen.

Um die Rastabstände, die durch die Zahnteilung der Außenverzahnung der Schenkel des Zugbügels und die entsprechenden Gegenverzahnung der Spannbacken vorgegeben sind, abfangen und ausgleichen zu können, kann gemäß einem weiteren Merkmal der vorliegenden Erfindung vorgesehen sein, daß der Exzenterhebel sich mit einem an der Gelenkachse der Zughebel angelenkten Exzenterkopf, der beim Verschwenken ein Anheben der Gelenkachse bewirkt, auf einer starken, im Tragkörper eingelassenen, vorzugsweise von einer Druckscheibe überdeckten Ausgleichsfeder mit geringem Federweg abstützt. Diese Feder sorgt dann auch noch in der Spannstellung durch das Nachoben-Drücken des Gelenks zu einer zusätzlichen Sicherung des Spannhebels in der Übertotpunkt-Spannstellung.

Mit besonderem Vorteil kann weiter vorgesehen sein, daß jeder Tragkörper mittels den Schlitz im Kofferboden durchgreifenden Haken im Schlitz geführt ist, wobei diese Führung selbstverständlich für die eigentliche Halterung bei verspanntem Zugbügel keine Rolle spielt und durch die Spannkräfte auch nicht belastet wird. Diese Führung soll lediglich verhindern, daß die Tragkörper beim Durchstecken der Zugbügel von unten abheben und gesondert festgehalten werden müßten.

Zur Abdichtung des eine einfache Anpassung der Halterungsvorrichtung an unterschiedliche Abstände der Querträger am Fahrzeugdach dienenden Längsschlitze im Kofferboden ist in weiterer Ausgestaltung der Erfindung vorgesehen, daß zwischen dem Tragkörper und dem Kofferboden eine mit den Tragkörper verschiebbare, den Schlitz abdeckende Dichtleiste angeordnet ist.

Schließlich liegt es auch noch im Rahmen der Erfindung, daß das Führungsblech für die Dichtleiste außen mit Verrippungen für Gegenverrippungen seitlich an der Unterseite des Tragkörpers versehen ist, so daß im gespannten Zustand, also bei angezogenem Zugbügel und in die Spannstellung verschwenktem Spannhebel, eine formschlüssige Verbindung gegeben ist, die jedes Verrutschen der Dichtschiene verhindert.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine Seitenansicht eines Kraftfahrzeugdachs mit einem auf zwei Querträgern aufgesetzten Dachkoffer,
- Fig. 2: einen Längsschnitt quer zur Längsachse eines Dach-Querträgers durch eine erfindungsgemäße Halterungsvorrichtung, und
- Fig. 3: eine Ansicht der Halterungsvorrichtung in Richtung des Pfeils III in Fig. 2.

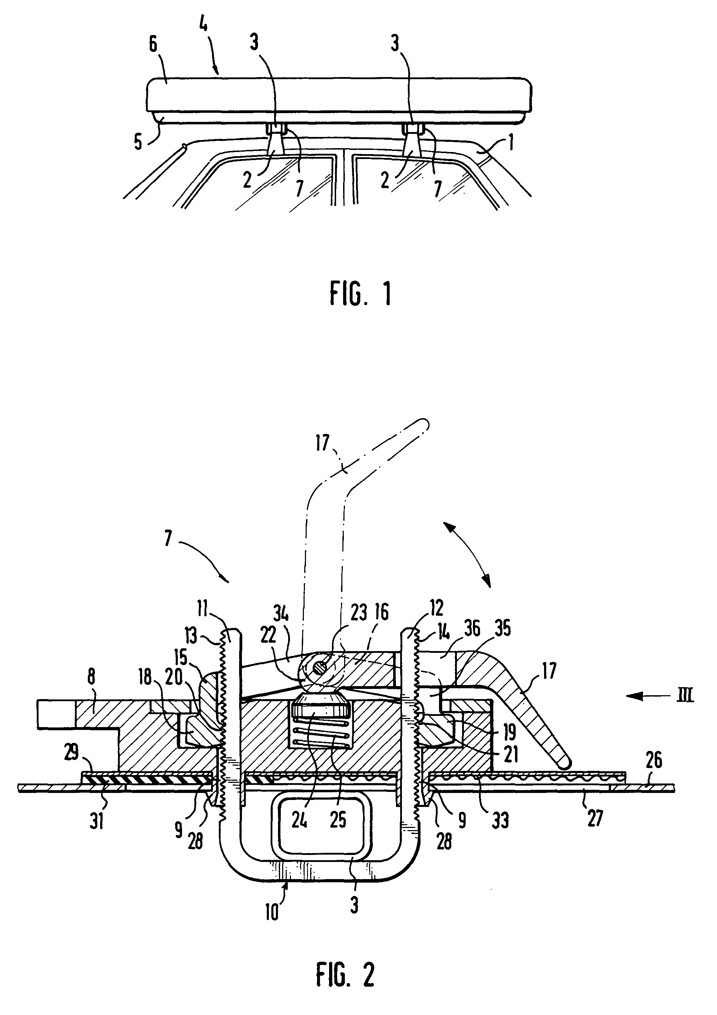

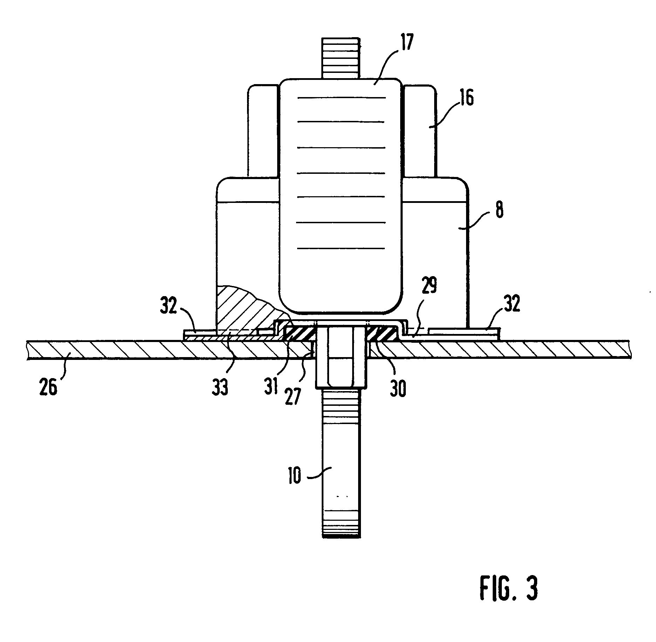

Auf dem Kraftfahrzeugdach 1 sind mit Hilfe von Füßen 2, die im dargestellten Ausführungsbeispiel in Regenrinnen an der Dachseite eingestellt sind, zwei beabstandete Querträger 3 befestigt, auf denen ein Dachkoffer 4 gehalten werden soll. Dieser aus einem Unterteil 5 und einem daran schwenkbar angelenkten Oberteil 6 bestehende Dachkoffer 4 wird mit Hilfe von jeweils zwei Halterungsvorrichtungen 7 je Querträger 3 befestigt, wobei eine solche Halterungsvorrichtung 7 im Schnitt und in Ansicht in den Figuren 2 und 3 vergrößert dargestellt ist.

Jede Halterungsvorrichtung besteht aus einem Tragkörper 8 mit Ausnehmungen 9 zum Durchstecken eines U-förmigen Zugbügels 10, dessen unterer als Klemmschenkel dienender Basisschenkel von unten gegen einen Querträger 3 verspannbar ist, während die durch die Ausnehmungen 9 gesteckten Schenkel 11 und 12, die auf der Außenseite mit Verzahnungen 13 bzw. 14 versehen sind, durch Spannbacken 15 und 16 sowie einen diese betätigenden Spannhebel 17 feststellbar bzw. wieder lösbar sind.

Die Spannbacken 15 und 16 sind an ihren freien Enden 18 und 19 mit Gegenverzahnungen 20, 21 zu den Zähnen 13, 14 versehen, wobei die Abmessungen so getroffen sind, daß in der strichpunktiert in Fig. 2 eingezeichneten Einschubstellung der Zugbügel 10 die Zugbügel zwar mit ihren Verzahnungen 13, 14 verrastend in die Gegenverzahnung der Spannbacken eingreifen, die Spannbacken aber vorzugsweise gegen eine Federung nach außen ausweichen können, so daß die Verzahnungen ratschend aneinander vorbeigeschoben werden können, bis der Basisschenkel des Zugbügels 10 in leichte Anlage an der Unterseite des Querträgers 3 gelangt. Wird dann der mit einem Exzenterkopf 22 auf der gemeinsamen Gelenkachse 23 mit den Spannbacken 15, 16 gelagerte Spannhebel 17 aus der strichpunktierten Einschubstellung in die ausgezogene Spannstellung gemäß Fig. 2 bewegt, so wird durch den Exzenterkopf die Gelenkachse 23 angehoben und damit die Verzahnung 13, 20 und 14, 21 fest ineinandergedrückt und gleichzeitig in dieser festen Spannstellung durch das Anheben der Gelenkachse 23 auch die Zugbügelschenkel 11 und 12 etwas nach oben gezogen, so daß eine festverspannte Anlage zwischen dem Basisschenkel und dem Querträger 3 erreicht wird. Zum Überbrücken der Zahnteilung bei dieser Verspannung ist vorgesehen, daß sich der Exzenterkopf 22 über eine Druckscheibe 24 auf einer sehr starken Feder 25 abstützt, die beispielsweise auch durch eine Vulkanisationsgummifeder gebildet sein kann. Diese sorgt dafür, daß bei einer Position, bei der die Zähne aufeinanderliegen, zunächst eine Eingriffsstellung der Zähne 13, 20 und 14 und 21 erreicht werden kann. Darüber hinaus drückt diese Feder 25 das Gelenk 23 in der Spannstellung nach oben und sorgt dafür, daß der Spannhebel 17 in der gespannten Übertotpunktstellung nur gegen diese starke Feder wieder in die strichpunktierte Einschubstellung und über diese hinaus in die endgültige Freigabestellung für den Zugbügel 10 bewegt werden kann. Der Exzenterkopf 22 kann dazu so ausgebildet sein, daß er im Anschluß an die Abflachung, die in der Einschubstellung auf der Druckscheibe 24 aufliegt, einen Abschnitt aufweist, der zu einer Absenkung der Gelenkachse 23 führt, so daß die Enden 18 und 19 der Spannbacken so weit nach außen geschwenkt werden, daß die Zähnungen 13, 20 und 14, 21 völlig ausgehoben sind, so daß der Zugbügel allein aufgrund seines Gewichts nach unten herausfallen kann. Diese Freigabestellung, die man nur durch besondere Verdrückung ausgehend von der Einschubstellung erreicht, ermöglicht ein sehr rasches und einfaches völliges Abnehmen der Dachkoffer von den Querträgern 3.

Der Kofferboden 26 des Unterteils 5 des Dachkoffers 4 ist, wie man insbesondere aus den Figuren 2 und 3 erkennen kann, mit Längsschlitzen 27 versehen, die eine Anpassung an unterschiedliche Abstände der Querträger 3 ermöglichen. Das Tragteil 8 ist mit Haken 28 in den Schlitzen 27 verschiebbar geführt, wobei zwischen dem Tragteil 8 und dem Kofferboden 26 ein Führungsblech 29 angeordnet ist, die in einer eingeprägten unterseitigen Rinne 30 eine Dichtleiste 31 aufnimmt. Diese Dichtleiste 31 ist mit zwei die Schenkel 11 und 12 des Zugbügels 10 eng umfassenden nicht gezeichneten Aussparungen versehen. Beim Verschieben des Tragkörpers 8 zur Positionierung der Ausnehmungen so, daß ein Zugbügel 10 unter Umgreifung eines Querträgers 3 eingeschoben werden kann, wird die im Führungsblech 29 gelagerte Dichtleiste 31 mitverschoben, und beim Verspannen der Zugbügel 10 die Dichtleiste 31 über den Schlitz 27 gepreßt, so daß kein Wasser von außen über den Schlitz 27 in den Dachkoffer eindringen kann. Das Führungsblech 29 ist an ihren äußeren Längsseiten mit Verrippungen 32 versehen, in welche Gegenverrippungen 33 seitlich an der Unterseite des Tragkörpers 8 eingreifen können, so daß im gespannten Zustand entsprechend Fig. 2 eine formschlüssige Verbindung gegeben ist.

Der Spannhebel 17 ist in Ausnehmungen 34, 35 der Spannbacken, die entsprechend breiter als der Spannhebel 17 ausgebildet sind, auf der gemeinsamen Gelenkachse 23 gelagert, wobei der Spannhebel mit einer weiteren Aussparung 36 versehen ist, die, wie auch die Ausnehmungen 34 und 35, zusätzlich zum Durchstecken der Schenkel 11, 12 des U-förmigen Zugbügels 10 dienen.

## Patentansprüche

1. Halterungsvorrichtung zur lösbaren verstellbaren Schnellhalterung eines Dachkoffers an auf einem Fahrzeugdach befestigten Querträgern, mit den Boden des Dachkoffers durchsetzenden und nach oben verspannbaren U-förmigen Zugbügeln, dadurch gekennzeichnet, daß die Schenkel (11, 12) des Zugbügels (10) mit Außenverzahnung (13, 14) versehen sind, in die die mit Gegenverzahnung (20, 21) versehenen Enden (18, 19) von durch ein Gelenk miteinander verbundenen Spannbacken (15, 16) eingreifen, die durch einen im Gelenk (23) angreifenden Spannhebel (17) aus einer Einschubstellung für den Zugbügel (10), in der die ineinanderhängenden Verzahnungen (13, 20; 14, 21) durch federndes Ausweichen der Spannbacken (15, 16) nach außen eine verrastende Verschiebung des Zugbügels (10) nach oben ermöglichen, durch Anheben des Gelenks in eine feste Eingriffsstellung der Spannbacken an die Schenkel (11, 12) des Zugbügels (10) schwenkbar und anhebbar sind.

2. Halterungsvorrichtung nach Anspruch 1, dadurch gekennzeichnet, daß die Schenkel (11, 12) der Zugbügel (10) die Spannbacken (15, 16) und den Spannhebel (17) in Ausnehmungen (34, 35, 36) durchsetzen, wobei die Spannbackenausnehmungen (34, 35) auch zur Aufnahme des Spannhebels (17) dienen.

3. Halterungsvorrichtung nach Anspruch 1 oder 2, dadurch gekennzeichnet, daß die Zugbügel (10) mit ihren Spannbacken (15, 16) und Spannhebeln (17) jeweils in einem über einem abdichtbaren Längsschlitz (27) des Kofferbodens (26) verschiebbaren Tragkörper (8) gelagert sind, auf dessen Oberseite sich der Spannhebel (17) mit einem Exzenterkopf (22) abstützt.

4. Halterungsvorrichtung nach einem der Ansprüche 1 bis 3, dadurch gekennzeichnet, daß der Spannhebel (17) bei der Verschwenkung aus der Einschubstellung in die Spannstellung in einer Übertotpunktlage gelangt.

5. Halterungsvorrichtung nach einem der Ansprüche 1 bis 4, dadurch gekennzeichnet, daß der Spannhebel (17), vorzugsweise gegen eine Federkraft, aus der Einschubstellung in eine die Verzahnungen (13, 20; 14, 21) völlig außer Eingriff bringende Zugbügelfreigabestellung verschwenkbar ist.

6. Halterungsvorrichtung nach einem der Ansprüche 3 bis 5, dadurch gekennzeichnet, daß der Spannhebel (17) sich mit seinem an der Gelenkachse (23) der Spannbacken (15, 16) angelenkten Exzenterkopf (22), der beim Verschwenken ein Anheben der Gelenkachse (23) bewirkt, auf einer starken, im Tragkörper (8) eingelassenen, vorzugsweise von einer Druckscheibe (24) überdeckten, Ausgleichsfeder (25) abstützt.

7. Halterungsvorrichtung nach einem der Ansprüche 3 bis 6, dadurch gekennzeichnet, daß jeder Tragkörper (8) mittels den Schlitz (27) im Kofferboden (26) durchgreifenden Haken (28) im Schlitz (27) geführt ist.

8. Halterungsvorrichtung nach einem der Ansprüche 3 bis 7, dadurch gekennzeichnet, daß zwischen dem Tragkörper (8) und dem Kofferboden (26) eine mit dem Tragkörper (8) verschiebbare, den Schlitz abdeckende Dichtleiste (29, 31) angeordnet ist.

9. Halterungsvorrichtung nach Anspruch 8, dadurch gekennzeichnet, daß das Führungsblech (29) mit einer eingeprägten unterseitigen Rinne (30) zur Aufnahme einer elastischen, die Schenkel (1, 12) der Zugbügel (10) eng umfassenden Dichtleiste (31) versehen ist.

10. Halterungsvorrichtung nach Anspruch 8 oder 9, dadurch gekennzeichnet, daß das Führungsblech (29) längs ihrer Außenkanten mit Verrippungen (32) für Gegenverrippungen (33) seitlich an der Unterseite des Tragkörpers (8) versehen ist.

## Claims

1. Mounting device for the detachable, adjustable quick fastening of a roof luggage case on transverse bars fixed to a vehicle roof, having U-shaped tension bows which penetrate the base of the luggage case and can be braced upward, characterised in that the flanges (11, 12) of the tension bow (10) are provided with male splining (13, 14), into which the ends (18, 19), provided with counter-splining (20, 21), of clamping jaws (15, 16) connected together with a hinge engage, the clamping jaws (15, 16) being pivotable and liftable by a clamping lever (17) acting in the hinge (23) from an insertion position for the tension bow (10), in which the interlocking splinings (13, 20; 14, 21), by resilient outward deflection of the clamping jaws ( 15, 16), permit locating displacement of the tension bow (10) in the upward direction, by lifting of the hinge into a fixed engagement position of the clamping jaws on to the flanges (11, 12) of the tension bow (10).

2. Mounting device according to claim 1, characterised in that the flanges (11, 12) of the tension bow (10) penetrate the clamping jaws (15, 16) and the clamping lever (17) in recesses (34, 35, 36), the clamping jaw recesses (34, 35) also acting as a seat for the clamping lever (17).

3. Mounting device according to claim 1 or 2, characterised in that the tension bows (10) are mounted with their clamping jaws (15, 16) and clamping levers (17) respectively in a carrying body (8) which is slidable over a sealable longitudinal slot (27) in the case base (26) and on whose upper face the clamping lever (17) bears with a cam head (22).

4. Mounting device according to one of claims 1 to 3, characterised in that the clamping lever (17), upon pivoting out of the insertion position into the clamping position, passes into an over-dead centre position.

5. Mounting device according to one of claims 1 to 4, characterised in that the clamping lever (17) is pivotable, preferably against the force of a spring, out of the insertion position into a tension bow release position, which brings the splinings (13, 20; 14, 21) completely out of engagement.

6. Mounting device according to one of claims 3 to 5, characterised in that the clamping lever (17) bears, with its cam head (22), which is coupled to the hinge axis (23) of the clamping jaws (15, 16) and which effects lifting of the hinge shaft (23) upon pivoting, on a thick balancing spring (25) which is let into the support body (8) and which is preferably covered by a pressure disc (24).

7. Mounting device according to one of claims 3 to 6, characterised in that each support body (8) is guided in the slot (27) by means of hooks (28) penetrating the slot (27) in the case base (26).

8. Mounting device according to one of claims 3 to 7, characterised in that a sealing strip (29, 31) slidable with the support body (8) and covering the slot is disposed between the support body (8) and the case base (26).

9. Mounting device according to claim 8, characterised in that the guide plate (29) is provided with an embossed, lower-side channel (30) for receiving a resilient sealing strip (31) which encompasses the flanges (1, 12) of the tension bow (10).

10. Mounting device according to claim 8 or 9, characterised in that the guide plate (29) is provided along its outer edges with ribs (32) for counter-ribs (33) laterally on the under-side of the support body (8).

## Revendications

1. Dispositif d'attache destiné à l'attache rapide, réglable et démontable d'un coffre de toit sur des barres transversales fixées sur un toit de véhicule, comprenant des étriers de traction en forme de U traversant le fond du coffre de toit et pouvant être serrés vers le haut, caractérisé en ce que les ailes (11, 12) de l'étrier de traction (10) sont pourvues d'une denture extérieure (13, 14) dans laquelle viennent en prise les extrémités pourvues d'une denture conjuguée (20, 21), de mors de serrage (15, 16) qui sont reliés mutuellement par une articulation, et qui, au moyen d'un levier de serrage (17) agissant au niveau de l'articulation (23), peuvent pivoter et être soulevés d'une position d'introduction pour l'étrier de traction (10), dans laquelle les dentures (13, 20; 14, 21) accrochées les unes dans les autres permettent un déplacement à encliquetage, vers le haut, de l'étrier de traction (10), par déport élastique vers l'extérieur des mors de serrage (15, 16), vers une position d'engrènement fixe des mors de serrage dans les branches (11, 12) de l'étrier de traction (10), par soulèvement de l'articulation.

2. Dispositif d'attache selon la revendication 1, caractérisé en ce que les ailes (11, 12) des étriers de traction (10) traversent les mors de serrage (15, 16) et le levier de serrage (17) dans des évidements (34, 35, 36), les évidements (34, 35) des mors de serrage servant également à recevoir le levier de serrage (17).

3. Dispositif d'attache selon la revendication 1 ou 2, caractérisé en ce que les étriers de traction (10), avec leurs mors de serrage (15, 16) et leurs leviers de serrage (17) respectifs, sont montés chacun dans un corps de support (8) que l'on peut faire coulisser au-dessus d'une fente longitudinale (27) du fond (26) du coffre, rendue étanche, le levier de serrage (17) venant s'appuyer sur le côté supérieur de ce corps de support (8) par une tête excentrique (22).

4. Dispositif d'attache selon l'une des revendications 1 à 3, caractérisé en ce que le levier de serrage (17) parvient dans une position de dépassement de point mort, lors du pivotement de la position d'introduction dans la position de serrage.

5. Dispositif d'attache selon l'une des revendications 1 à 4, caractérisé en ce qu'il est possible de faire pivoter le levier de serrage (17), de préférence à l'encontre d'une force de ressort, de la position d'introduction dans une position de dégagement de l'étrier de traction amenant les dentures (13, 20; 14, 21) totalement hors de prise réciproque.

6. Dispositif d'attache selon l'une des revendications 3 à 5, caractérisé en ce que le levier de serrage (17) s'appuie, avec sa tête excentrique (22) articulée sur l'axe d'articulation (23) des mors de serrage (15, 16) et produisant un soulèvement de l'axe d'articulation (23) lors du pivotement, sur un ressort de compensation (25) de forte puissance, encastré dans le corps de support (8) et de préférence recouvert par un disque de compression (24).

7. Dispositif d'attache selon l'une des revendications 3 à 6, caractérisé en ce que chaque corps de support (8) est guidé dans la fente (27) du fond (26) du coffre, au moyen de crochets (28) traversant la fente (27).

8. Dispositif d'attache selon l'une des revendications 3 à 7, caractérisé en ce qu'entre le corps de support (8) et le fond (26) du coffre, est disposée une barrette d'étanchéité (29, 31) recouvrant la fente et pouvant coulisser avec le corps de support (8).

9. Dispositif d'attache selon la revendication 8, caractérisé en ce que la tôle de guidage (29) est pourvue d'une rainure (30) formée en creux sur son côté inférieur et destinée à recevoir une languette d'étanchéité (31) élastique, enserrant étroitement les ailes (11, 12) des étriers de traction (10).

10. Dispositif d'attache selon la revendication 8 ou 9, caractérisé en ce que la tôle de guidage (29) est dotée le long de ses bords extérieurs d'un nervurage (32) pour un nervurage conjugué (33) situé latéralement sur le côté inférieur du corps de support (8).
